# EUROPÄISCHE PATENTANMELDUNG

(11) **EP 2 339 088 A2**
(43) Veröffentlichungstag der Anmeldung: **29.06.2011**
(21) Anmeldenummer: 10196407.0
(22) Anmeldetag: 22.12.2010
(51) Int. Cl.: E04D 13/14, F16L 5/02, F16L 5/10, E04B 1/66

(54) **Dampfbremse oder Dampfsperre zur Ausbildung als Manschettenvorrichtung für eine luftdichte Abdichtung einer bereits verlegten Dampfbremse oder Dampfsperre und Verfahren zum Herstellen einer Manschettenvorrichtung**

(30) Priorität: 28.12.2009 DE 102009060673
(71) Anmelder: SAINT-GOBAIN ISOVER G+H AG, 67059 Ludwigshafen (DE)
(72) Erfinder: Bensch, Peter, 68526, Ladenburg (DE); Cule, Kresimir, 67141, Neuhofen (DE); Kodas, Güven, 72181, Starzach (DE)
(74) Vertreter: Bockhorni & Kollegen

(57) **Zusammenfassung**

Die Erfindung betrifft eine Dampfbremse oder Dampfsperre (10) zur Ausbildung, eine Manschettenvorrichtung (20) für eine luftdichte Abdichtung einer bereits verlegten Dampfbremse oder Dampfsperre (10'), ein Verfahren zum Herstellen der Manschettenvorrichtung (20) sowie ein Verfahren zum luftdichten Abdichten einer bereits verlegten Dampfbremse oder Dampfsperre (10'). Mit der erfindungsgemäßen Dampfbremse oder Dampfsperre (10) lassen sich auf einfache Art Vorrichtungen vorsehen, die geeignet sind, Durchbrüche bzw. Durchdringungen (11) einer bereits verlegte Dampfbremse oder Dampfsperre (10') luftdicht abzudichten.

## Beschreibung

Die Erfindung betrifft eine insbesondere feuchteadaptive Dampfbremse oder Dampfsperre, eine Manschettenvorrichtung für eine luftdichte Abdichtung einer Dampfbremse oder Dampfsperre, ein Verfahren zum Herstellen der Manschettenvorrichtung und ein Verfahren zum luftdichten Abdichten einer Dampfbremse oder Dampfsperre.

Derartige Dampfbremsen oder Dampfsperren werden vornehmlich für den Einsatz zur Wärmedämmung von Gebäuden verwendet und zwar maßgeblich in Zusammenhang mit Wärmedämmsystemen für Gebäude. Für die Wärmedämmung von Gebäuden, insbesondere Dächern, werden in der Regel diffusionsoffene Unterspannbahnen unterhalb der etwa durch Ziegel gebildeten Bedachung, darunter eine Wärmedämmschicht, etwa aus Mineralwolle, schließlich eine Dampfbremse oder Dampfsperre und darunter eine Verkleidung verwendet. Mit dem Einsatz einer Dampfbremse oder Dampfsperre werden vornehmlich zwei Absichten verfolgt. Zum einen soll eine Luftdichtheit der an sich diffusionsoffenen, luftdurchlässigen Wärmedämmschicht erzielt werden, um das Eindringen von kalter Au-βenluft in den Gebäudeinnenraum sowie das Entweichen warmer Raumluft aus dem Gebäude zu verhindern, wodurch Wärmeenergieverluste vermeidbar sind. Zum anderen soll die Dampfbremse eine gewisse Sperrwirkung gegen die Diffusion von Luftfeuchte aufweisen, um einen unerwünschten Feuchteeintrag in die Baukonstruktion zu vermeiden, der zu Tauwasserausfall und/oder Schimmelbildung führen kann.

Als Maß für die Sperrwirkung einer Dampfbremse oder Dampfsperre wird der Wasserdampf-Diffusionswiderstand als diffusionsäquivalente Luftschichtdicke (sog. S_{d}-Wert) angegeben, der nach DIN EN ISO 12572: 2001 ermittelt wird. In der Praxis unterscheidet man zwischen Dampfbremsen, bei denen der S_{d}-Wert in Bereichen kleiner 20 m, und Dampfsperren bei denen der S_{d}-Wert größer etwa 80 m liegt.

Feuchteadaptive Dampfbremsen weisen als Besonderheit einen von der Umgebungsfeuchte abhängigen S_{d}-Wert auf, der material- und dickenabhängig zwischen etwa 0,2 m und grö-βer 5 m betragen kann, wobei der S_{d}-Wert mit zunehmender Umgebungsfeuchte abnimmt. Derartige feuchteadaptive Dampfbremsen sind beispielsweise in der DE 195 14 420 Cl oder der DE 101 36 089 A1 beschrieben, auf die für die bauphysikalische Wirkweise bezüglich des Zusammenspiels von Feuchteeintrag und Austrag verwiesen wird. Es sei angemerkt, dass die Luftdichtheit nicht mit der Wasserdampfdichtheit oder - dichtigkeit verwechselt werden darf, da eine Durchlässigkeit der Dampfbremse für Wasserdampf unter bestimmten Bedingungen gerade erwünscht ist.

Vereinfachend steht im Folgenden meist der Begriff Dampfbremse für alle bekannten Folien, also für insbesondere feuchteadaptive Dampfbremsen oder auch Dampfsperren.

Problematisch bei Dampfbremsen sind nun jene Bereiche, die aufgrund örtlicher Gegebenheiten mit größeren Öffnungen versehen werden müssen, um eine Passage für Rohrleitungen, Kamine oder sonstige Körper, die die Folie durchdringen müssen, bereitzustellen. Die Schwierigkeit, die hierbei auftritt, ist es, die Dampfbremse wieder vollständig abzudichten, so dass die Übergangsbereiche zwischen dem durchdringenden Körper und der Dampfbremse wieder luftdicht sind.

Eine in der Baupraxis übliche Vorgehensweise ist es, in einem solchen Fall die Dampfbremse mit dem durchdringenden Körper unter Verwendung von Klebebändern zu verkleben. Ein hohes Maß an Dichtigkeit kann hierbei nicht erreicht werden. Insbesondere dann, wenn mehrere solcher Durchdringungen mit Verklebung vorliegen, summieren sich die Leckageströme auf, so dass es zu erheblichen Wärmeverlusten und/oder zu einem Nichtbestehen eines Blower-Door-Tests als Kriterium für die Luftdichtheit der Gesamtkonstruktion kommen kann.

Zur Lösung dieses Abdichtungsproblems sind aus dem Stand der Technik eine Vielzahl von Ansätzen bekannt. Diese schlagen die Verwendung vorgeformter Manschetten aus mehr oder weniger steifem Material vor. Solche Manschetten sind aus einem Flächenelement aufgebaut, welches auch als "Kragen" bezeichnet wird, und das mit der Dampfbremse, Dichtplane oder dergleichen luftdicht verbunden wird. Weiterhin weisen derartige Manschetten ein schlauchförmiges Element ("Tülle") auf, welches seinerseits mit dem Flächenelement luftdicht, und je nach Anwendung der Manschette auch wasserdicht verbunden ist. An dem dem Flächenelement abgewandten Ende des schlauchförmigen Elements ist eine Randzone angeordnet, die auf einen Durchmesser einer durchdringenden Leitung angepasst ist und eine Abdichtung mit der Leitung ermöglicht. Für diese Abdichtung werden verschiedene Optionen vorgeschlagen, etwa eine klemmenden Dichtung, wie etwa eines in das schlauchförmige Element dort integrierten Dichtrings (z. B. DE 202 00 820), eine mechanische Quetschung (z.B. DE 297 03 352), oder eine luftdichte Verklebung (z.B. DE 10 2004 038 687).

Nachteilig an diesen Manschetten ist, dass für eine luftdichte Abdichtung die Tülle an den Durchmesser der üblicherweise kreisförmigen durchdringenden Leitung angepasst ist. Dies hat zur Folge, dass bei der Vielzahl an Leitungen mit unterschiedlichen Durchmessern, wie sie in einem Dach vorkommen können, Manschetten mit unterschiedlichen Abmessungen insbesondere der Tülle vorgehalten werden müssen. Dies stellt insbesondere dann ein Problem dar, wenn die Manschette aus vergleichsweise steifen Materialien gefertigt ist, welche sich nur schlecht an unterschiedliche, von der Dachneigung vorgegebene Winkel zur üblicherweise senkrechten Leitung anpassen lassen und somit eine potentielle Schwachstelle ist. Auch sind diese Manschetten vergleichsweise teuer.

Es ist Aufgabe der Erfindung, eine Dampfbremse oder Dampfsperre bereitzustellen, mit welcher ein luftdichtes Abdichten von Durchbrüchen bzw. Durchdringungen einer bereits verlegten Dampfbremse oder Dampfsperre auf einfache Art zuverlässig ermöglicht wird. Ferner ist es Aufgabe der Erfindung, eine geeignete Vorrichtung zum Abdichten vorzuschlagen, die aus der Dampfbremse oder Dampfsperre ausgebildet ist sowie ein Verfahren zur Herstellung derartiger Vorrichtungen und ein Verfahren zum Abdichten einer bereits verlegten Dampfbremse oder Dampfsperre.

Diese Aufgabe wird durch eine Dampfbremse nach Anspruch 1, durch eine Manschettenvorrichtung nach Anspruch 14 sowie entsprechende Verfahren nach den Ansprüchen 16 und 20 gelöst.

Insbesondere wird die Aufgabe vorrichtungsmäßig durch eine Dampfbremse, insbesondere feuchteadaptive Dampfbremse oder Dampfsperre gelöst, die insbesondere als Folienelement und insbesondere zum Einsatz bei der Wärmedämmung von Gebäuden vorgesehen ist, wobei die Dampfbremse oder Dampfsperre rasterartige Markierungen als Schnitthilfslinien zur Bildung eines Schnittmusters aufweist (das heißt, es ist mindestens eine Schnitthilfslinie vorgesehen), so dass mindestens eine Manschettenvorrichtung ausschneidbar ist, die auf oder an eine bereits angebrachte Dampfbremse oder Dampfsperre (an einer hierfür vorgesehenen Stelle) zum luftdichten Abdichten der bereits angebrachten Dampfbremse oder Dampfsperre aufbringbar oder anbringbar ist, an einem Durchdringungsbereich, an welchem die Bremse oder Sperre von einem Körper durchdrungen ist. Die Manschettenvorrichtung ist derart anbringbar, dass mindestens ein Teil der Manschettenvorrichtung den durchdringenden Körper umschließt. Die Schnitthilfslinien weisen mindestens eine erste Schnitthilfslinie auf, die als mindestens eine geometrische Figur zur Ausbildung, insbesondere zum Ausschneiden, eines Lochbereichs der Manschettenvorrichtung vorgesehen ist, wobei der Lochbereich zur Aufnahme des Körpers vorgesehen ist und wobei der Lochbereich im Wesentlichen der Projektion des Querschnitts des durchdringenden Körpers auf die angebrachte Dampfbremse oder Dampfsperre angepasst ist.

Ein wesentlicher Punkt der Erfindung liegt darin, dass mittels der Dampfbremse nunmehr ein geeignetes Element vorliegt, um Maßnahmen zur luftdichten Abdichtung der Durchdringungen (oder der mindestens einen Durchdringung) oder künstlich erzeugten Öffnungsbereiche in der bereits verlegten Dampfbremse ergreifen zu können (z. B. eine Manschettenvorrichtung herzustellen). Die Manschettenvorrichtung ist auf einfache Weise aus dem gewünschten Material, nämlich dem Material der Dampfbremse selbst, ausschneidbar und eine Abdichtung einer bereits verlegten Folie wird sicher und einfach ermöglicht. Somit kann auf komplizierte, unzureichende Verklebungen an den Übergangsbereichen von durchdringendem Körper und Bremse verzichtet werden.

Aus der Folie (z. B. einem Folienrest) ausgeschnittene Elemente werden also letztendlich so aufbereitet, dass der in der Dampfbremse zu schließende Bereich (Durchdringung) durch Aufbringen oder Aufziehen der Manschettenvorrichtung auf den durchdringenden Körper und damit Abdecken der Durchdringung und anschlie-βendem Abkleben bzw. Abdichten von Übergangsbereichen ermöglicht wird. Hierbei ist es bevorzugt, mit dem Lochbereich der Manschettenvorrichtung dem Umfang des durchdringenden Körpers an der Durchdringungsstelle möglichst nahe zu kommen, so dass nur geringe Spaltbreiten entstehen, um Verwerfungen der Dampfbremse weitgehend zu vermeiden. Da mit der erfindungsgemäßen Manschettenvorrichtung gearbeitet wird, kann die durchdrungene Dampfbremse um den durchdringenden Körper großzügig ausgeschnitten werden. Die so in der verlegten Dampfbremse entstehende Öffnung wird mit der passgenauen Manschettenvorrichtung wieder abgedeckt.

Mit dem erfindungsgemäßen Gegenstand wird berücksichtigt, dass der Umfang bzw. der Querschnitt des durchdringenden Körpers als Projektion auf die Dampfbremse vorgegeben ist, wobei die Projektion vor allem dann relevant ist, wenn sie nicht dem tatsächlichen Querschnitt des Körpers entspricht. Dies ist dann der Fall, wenn der Körper die Bremse oder Sperre nicht senkrecht durchdringt, also beispielsweise bei einer Dachdämmung. Hier muss die Neigung des Daches mit einbezogen werden, da z. B. ein die Dampfbremse durchdringendes vertikal angeordnetes Rohr eine ellipsenförmige Projektion als Durchdringung an der Dampfbremse wiedergibt.

Um nun die Manschettenvorrichtung möglichst eng an den durchdringenden Körper anzuschmiegen, muss der Lochbereich so ausgebildet werden können, dass er an diese Projektion angepasst ist.

In einer bevorzugten Ausführungsform ist die Dampfbremse oder Dampfsperre derart ausgebildet, dass ein erstes Flächenelement der Manschettenvorrichtung zum insbesondere luftdichten Anordnen, insbesondere Aufsetzen, der Manschettenvorrichtung auf die bereits angebrachte Dampfbremse oder Dampfsperre an dem Durchdringungsbereich ausschneidbar ist. Ebenfalls ausschneidbar ist ein zweites Flächenelement der Manschettenvorrichtung zum Ausbilden eines schlauchförmigen Elements zum Umschließen des Körpers und Anordnen an dem ersten Flächenelement derart, dass das schlauchförmige Element mit einem ersten Ende in den Lochbereich des ersten Flächenelements mündet.

Das heißt, mit der markierten Folie ist es sehr einfach, entsprechende Vorrichtungen vorzusehen, die es ermöglichen, eine durchbrochene, bereits an dem gewünschten Ort (z. B. bei einer Dachdämmung) angeordnete Folie wieder abzudichten.

Die Flächenelemente sind also ebenfalls bevorzugt Folienelemente, die zur Abdichtung einer bereits verlegten Folie in eine entsprechende Form gebracht werden können.

Wie bereits angedeutet, ist die Dampfbremse oder ―sperre, die zum Ausschneiden abdichtender Vorrichtungen vorgesehen ist, vorzugsweise aus demselben Material ausgebildet, wie die bereits verlegte Dampfbremse oder ―sperre. Damit wird ein und dasselbe Material für (z. B.) die gesamte Dämmung verwendet. Insbesondere lassen sich auch Folienreste, die bei der Verlegung der Bremse als Überschuss verbleiben, zum Ausschneiden der Manschettenvorrichtung verwenden. Grundsätzlich ist es natürlich möglich, abdichtende Elemente, wie z. B. die Manschettenvorrichtung, auch aus einem anderen Material herzustellen (z. B. aus Aluminium-Folie, oder aus dergleichen wasserdampfundurchlässigem und luftundurchlässigem Material).

In einer bevorzugten Ausführungsform ist die Dampfbremse als Folie vorgesehen, wie bereits oben beschrieben. Besonders bevorzugt ist eine feuchteadaptive Dampfbremse, insbesondere auf der Basis von Polyamid.

Die Folien können aus einzelnen Folien ausgebildet sein oder aber es ist ein Mehrschichtenaufbau, insbesondere mit einer Verstärkungsschicht als Kaschierlage auf der Funktionsfolie vorgesehen, je nach Anwendungszweck.

Nach einer zweckmäßigen Maßgabe der Erfindung ist die mindestens eine erste Schnitthilfslinie als geometrische Figur vorgesehen, insbesondere auf die Dampfbremse aufgedruckt, vorzugsweise als ein Kreis, eine Ellipse, ein Quadrat, ein Rechteck und/oder dergleichen Figur. Je nach Ausgestaltung der Durchdringung bzw. des durchdringenden Körpers kann so eine geeignete Form ausgewählt und ein entsprechender Lochbereich in die Manschettenvorrichtung eingearbeitet werden (der der Projektion angepasst ist). Vorzugsweise sind mindestens zwei unterschiedliche geometrische Figuren auf der Bremse oder Sperre vorgesehen, also z. B. aufgedruckt (z. B. ein Kreis und eine Ellipse).

Um unterschiedliche Größen von Rohren, Kaminen etc. berücksichtigen zu können sind je geometrischer Figur mindestens zwei formgleiche Figuren unterschiedlicher Größe vorgesehen, die vorzugsweise konzentrisch zueinander angeordnet sind. Durch die konzentrische Anordnung lassen sich viele Größen platzsparend auf der Dampfbremse, vor allem auf der Folie, unterbringen.

Die aufgedruckten Schnitthilfslinien, insbesondere diejenige oder diejenigen zur Ausbildung des Lochbereichs der Manschette sind vorzugsweise derart ausgebildet, dass sie auf Nenndurchmesser etwaiger durchdringender Körper abgestimmt sind. Auch die ellipsenförmigen Linien stellen vorzugsweise Projektionen von Rohrelementen mit kreisförmigem Nennquerschnitt dar, bei Anbringen der Dampfbremse an üblichen Dachneigungen von z. B. 35° bzw. z. B. im Bereich von 25° bis 45°.

Vorzugsweise weisen die Schnitthilfslinien neben den ersten Schnitthilfslinien mindestens zweite Schnitthilfslinien (oder mindestens eine zweite Schnitthilfslinie) auf, die als ein Grobraster ausgebildet sind und die sich vorzugsweise über die gesamte Dampfbremse oder Dampfsperre erstrecken. Die geometrischen Figuren überlagern hierbei das Grobraster. Anhand des Grobrasters können die Flächenelemente der Manschettenvorrichtung ausgeschnitten werden, z. B. entlang der Linien des Grobrasters oder auch dazwischen. Die Manschette ist ausreichend groß auszubilden, da die um den durchdringenden Körper ausgeschnittene Öffnung in der Dampfbremse wieder abgedeckt werden muss. Vorzugsweise überlappt die Manschettenvorrichtung die ausgeschnittene Öffnung an den Übergangsbereichen von Folie zu Manschette.

Vorzugsweise ist das Grobraster als ein Gittermuster ausgebildet, dessen einzelne Elemente vorzugsweise als Quadrate, insbesondere als Quadrate mit einer Seitenlänge von jeweils 10 cm vorgesehen sind. Anhand dieses Maßstabs lässt sich auf einfache Weise eine geeignet große Abdeckung für die oben beschriebene Öffnung in der Dampfbremse anfertigen, also z. B. ausschneiden.

Da etwaige Aufdrucke auf der Folie deren Eigenschaften nicht beeinträchtigen, bietet es sich an, möglichst viele geometrische Figuren aufzudrucken, die sich in insbesondere regelmäßigen Abständen wiederholen. So kann z. B. alle 10 oder 20 cm eine Figur vorgesehen sein, beispielsweise mit zeilenweise abwechselndem Muster (Rapport auf der Druckrolle). Das heißt, die Figuren erstrecken sich z. B. längs der Bahn einer Dampfbremsfolie, wobei mehrere Zeilen untereinander angeordnet sind. Jede Zeile kann dabei eine andere Figur aufweisen oder aber die Figuren wechseln innerhalb einer Zeile.

In einer vorteilhaften Ausführungsform sind die Schnitthilfslinien, sowohl die ersten, als auch die zweiten, als gestrichelte, punktierte und/oder durchgezogene Linien vorgesehen. Erste und zweite Schnitthilfslinien können insbesondere unterschiedliche Ausgestaltungen aufweisen, insbesondere auch mit unterschiedlicher Strichstärke und -dicke.

Vorzugsweise weist die Dampfbremse oder Dampfsperre mindestens entlang einer vorgegebenen Richtung einen abgebildeten, insbesondere aufgedruckten Maßstab auf.

Eigenständiger Schutz wird beansprucht für eine Manschettenvorrichtung, die aus der soeben beschriebenen Dampfbremse oder ―sperre ausgebildet ist. Die Manschettenvorrichtung ist für eine luftdichte Abdichtung einer insbesondere feuchteadaptiven Dampfbremse oder Dampfsperre (bereits verlegt bzw. angebracht an einer hierfür vorgesehenen Stelle), die insbesondere zum Einsatz bei der Wärmedämmung von Gebäuden vorgesehen, an einem Durchdringungsbereich, an welchen die bereits verlegte Dampfbremse oder Dampfsperre von einem Körper durchdrungen ist, vorgesehen. Hierfür umfasst die Manschettenvorrichtung ein erstes Flächenelement zum insbesondere luftdichten Anordnen, insbesondere Aufsetzen, der Manschettenvorrichtung auf die Dampfbremse oder Dampfsperre an dem Durchdringungsbereich, mit einem insbesondere mittig angeordneten Lochbereich zur Aufnahme des Körpers. Der Lochbereich ist im Wesentlichen der Projektion des Querschnitts des durchdringenden Körpers auf die Dampfbremse oder Dampfsperre angepasst.

Ferner ist ein an dem ersten Flächenelement angeordnetes, insbesondere aufgesetztes bzw. aufsetzbares schlauchförmiges Element zum Umschließen des Körpers vorgesehen, wobei das schlauchförmige Element an den Enden zur Durchführung des Körpers offen ist und mit einem ersten Ende in den Lochbereich des ersten Flächenelements mündet, derart, dass das erste Flächenelement mindestens teilweise überlappend auf einem Auflagebereich des schlauchförmigen Elements aufliegt. Das schlauchförmige Element ist zudem mit dem ersten Flächenelement einstückig, insbesondere luftdicht, verbunden.

Vorzugsweise ist die Manschettenvorrichtung derart ausgebildet, dass sie mittels Befestigungsmittel (z. B. erste, zweite, dritte Befestigungsmittel), insbesondere Klebeelementen wie z. B. Klebebändern (Klebebandstreifen), auf den Durchdringungsbereich aufbringbar ist, derart, dass Übergangsbereiche zwischen durchdringendem Körper, Manschettenvorrichtung und der Dampfbremse oder Dampfsperre insbesondere luftdicht abdichtbar bzw. abgedichtet sind. Der Übergangsbereich oder die Übergangsbereiche entstehen durch das Anliegen der Manschettenvorrichtung einerseits an dem durchdringenden Körper und andererseits an der bereits angebrachten Dampfbremse. Die Übergangsbereiche müssen also sorgfältig abgedichtet, z. B. abgeklebt werden, so dass kein Öffnungsbereich vorgesehen ist. Mittels der passgenauen Manschette (insbesondere den Lochbereich betreffend) vereinfachen sich diese Klebearbeiten.

Ein System zum luftdichten Abdichten einer bereits angebrachten bzw. verlegten Dampfbremsfolie oder Dampfsperrfolie könnte aus der soeben beschriebenen Manschettenvorrichtung und den entsprechenden Befestigungsmitteln zum Befestigen der Manschettenvorrichtung an der Dampfbremse bzw. ―sperre und an dem durchdringenden Körper ausgebildet sein.

Eigenständiger Schutz wird beansprucht für ein Verfahren zum Herstellen einer Manschettenvorrichtung mittels einer insbesondere feuchteadaptiven Dampfbremse oder Dampfsperre wie sie soeben beschrieben wurde, mit einem Hilfselement, das im Wesentlichen dem Körper mindestens an dem Durchdringungsbereich nachgebildet ist, und ein erstes Ende und ein zweites Ende aufweist, wobei das erste Ende der Projektion des Querschnitts des durchdringenden Körpers auf die bereits angebrachte Dampfbremse oder Dampfsperre (an einer hierfür vorgesehenen Stelle, z. B. bei einem wärmegedämmten Dach) angepasst ist, wobei das Verfahren folgende Schritte aufweist:
- Ausschneiden des ersten Flächenelements aus der Dampfbremse oder Dampfsperre, insbesondere entlang einer der zweiten Schnitthilfslinien,
- Ausschneiden des zweiten Flächenelements aus der Dampfbremse oder Dampfsperre, insbesondere entlang einer der zweiten Schnitthilfslinien,
- Ausschneiden eines Lochbereichs aus dem ersten Flächenelement entlang einer der ersten Schnitthilfslinien, derart, dass der Lochbereich im Wesentlichen der Projektion des Querschnitts des durchdringenden Körpers auf die angebrachte Dampfbremse oder Dampfsperre angepasst ist (d. h., das erste Flächenelement muss so aus der "großen" Folie ausgeschnitten werden, dass mindestens die gewünschte Schnittlinie für den Lochbereich auf dieser vorgesehen ist),
- Umhüllen des Hilfselements mit dem zweiten Flächenelement, insbesondere mit Überlappungsbereichen an dem zweiten Flächenelement, derart, dass das schlauchförmige Element ausgebildet wird,
- Ablängen des schlauchförmigen Elements an dem ersten Ende des Hilfselements entlang dessen Kontur, derart, dass ein erstes Ende des schlauchförmigen Elements im Wesentlichen der Projektion des Querschnitts des durchdringenden Körpers auf die angebrachte Dampfbremse oder Dampfsperre angepasst ist,
- Einschneiden, insbesondere mehrfaches Einschneiden des schlauchförmigen Elements an dessen erstem Ende, in einer Längserstreckungsrichtung des schlauchförmigen Elements derart, dass sich die so entstehenden Einschnitte vom ersten Ende in das schlauchförmige Element erstrecken und so ein Einschnittbereich ausgebildet wird,
- Auffächern des Einschnittbereichs durch Umbiegen dieses Bereichs entlang einer Biegekante derart, dass der Einschnittbereich außen am schlauchförmigen Element liegt und einen Auflagebereich bildet, der dem schlauchförmigen Element zugewandt ist, zum Anlegen oder Anordnen des ersten Flächenelements,
- Verkleben des Einschnittbereichs des schlauchförmigen Elements mit dem ersten Flächenelement derart, dass das erste Ende des schlauchförmigen Elements in den Lochbereich des ersten Flächenelements mündet,
- Entfernen des Hilfselements aus der Manschettenvorrichtung.

Es ist also auf einfache Weise möglich, die Manschettenvorrichtung herzustellen, mit sehr einfachen Mitteln, durch Nutzen eines Teils der bereits vorhandenen Dampfbremse bzw. Dampfsperre, der noch nicht (z. B. im Rahmen einer Wärmedämmung) verlegt ist. Zum vorübergehenden Stabilisieren des schlauchförmigen Elements ist das Hilfselement vorgesehen, das hilft, die Form des schlauchförmigen Elements zu bilden und ein Verkleben von erstem Flächenelement und zweiten Flächenelement (bzw. dem daraus entstehenden schlauchförmigen Element) zu erleichtern.

Das Erzeugen des Einschnittbereichs wird ebenfalls durch das Hilfselement erleichtert. So ist es möglich, bei Herstellung des schlauchförmigen Elements das Hilfselement mit einer bestimmten Länge aus dem schlauchförmigen Element zu ziehen und so eine definierte Einschnittlänge bis zum ersten Ende des Hilfselements zum Einschneiden zu nutzen. Damit sind alle Schnittlängen der einzelnen Einschnitte gleichmäßig lang ausgebildet, da das zurückgezogene Hilfselement einen Anschlag ausbildet. Grundsätzlich können die Einschnitte auch auf dem Hilfselement, beispielsweise mit einem Messer erfolgen.

Damit der Lochbereich im Wesentlichen exakt nachgebildet werden kann, sollten die einzelnen Schnitte nicht zu weit voneinander beabstandet sind. Es sollten so viele Schnitte angebracht werden, dass die entstehenden Streifen hinreichend schmal sind, um Verwerfungen bei der Ausbildung der Manschettenvorrichtung zu vermeiden. Beispielsweise könnte alle 2 cm ein Schnitt angeordnet werden, so dass sich für eine durchschnittlich große Manschettenvorrichtung in etwa 15 bis 20 Einschnitte ergeben.

Als Hilfselement ist ein Element vorgesehen, das den durchdringenden Körper im fraglichen Bereich nachbildet, also z. B. ein Rohrstück, das dem Rohr entspricht, das die Bremse oder Sperre durchdringt.

Mit einem "Teil der Dampfbremse oder Dampfsperre" ist ein weiteres Dampfbremsenelement oder Dampfsperrenelement angesprochen, das noch nicht verlegt ist und das beispielsweise als Rest beim Verlegen der eigentlichen Dampfbremse übrig bleibt. Auch kann explizit ein Stück Folie von einer Vorratsrolle der Bremse verwendet werden.

Vorzugsweise ist ein weiterer Schritt für die Herstellung der Manschettenvorrichtung vorgesehen, nämlich das Anbringen von mindestens einem Befestigungsmittel, insbesondere von mindestens einem Klebeband oder von Klebebändern an dem ersten Flächenelement derart, dass die Manschettenvorrichtung auf der bereits angebrachten Dampfbremse oder Dampfsperre anbringbar ist. Das heißt, das Flächenelement wird schon mit den entsprechenden Klebebändern vorbereitet und kann dann über den durchdringenden Körper gestülpt und auf die verlegte Bremse aufgesetzt und an dieser fixiert werden.

Die Manschettenvorrichtung soll die Durchdringung vorzugsweise überlappen (die Manschette ist also in ihrer Außenkontur - Außenkontur des ersten Flächenelements - größer als die Durchdringung). Damit lässt sich der Übergangsbereich Dampfbremse ―Manschette leicht abdichten bzw. abkleben. Zur Verklebung von Flächenelement und Dampfbremse sollte das Flächenelement einen Rand mit einer Breite von mindestens etwa 3 cm aufweisen, der mit den marktüblichen Klebebändern von 6 cm Breite eine gesicherte luftdichte Verklebung ermöglicht.

Als ein weiterer Schritt ist vorzugsweise das Fixieren des zweiten Flächenelements auf dem Hilfselement zur Ausbildung des schlauchförmigen Elements mittels mindestens eines weiteren Befestigungsmittels, insbesondere mittels mindestens eines Klebebands, vorgesehen. Die Fixierung ist so zu verstehen, dass das Flächenelement um das Hilfselement (z. B. ein Rohrabschnitt) überlappend gewickelt wird und die Überlappungsbereiche miteinander verklebt werden (ohne eine Befestigung an dem Hilfselement selbst zu erzielen). Zur weiteren Verarbeitung ist das gewickelte Flächenelement dann durch das Hilfselement stabilisiert. Das Hilfselement kann nach der Fertigstellung der Manschettenvorrichtung entfernt werden.

Weitere Schritte zum Verkleben des schlauchförmigen Elements mit dem ersten Flächenelement sind vorzugsweise vorgesehen, nämlich
- Anbringen eines Klebstoffes auf dem dem schlauchförmigen Element zugewandten Auflagebereich des Einschnittbereichs, insbesondere entlang der Biegekante,
- Auflegen des ersten Flächenelements auf den Auflagebereich des Einschnittbereichs des schlauchförmigen Elements derart, dass das erste Flächenelement mittels des Lochbereichs über das schlauchförmige Element, insbesondere mit dem enthaltenen Hilfselement, gestülpt wird, und
- Verkleben des ersten Flächenelements mit dem schlauchförmigen Element, insbesondere durch Andrücken des ersten Flächenelements.

Das heißt also, dass die umgeknickten eingeschnittenen Bereiche als Auflage für das erste Flächenelement dienen. Der Klebstoff wird z. B. als Raupe um den Umfang des Einschnittbereichs bzw. des schlauchförmigen Elements aufgetragen. Durch das Auflegen des ersten Flächenelements auf den Auflagebereich des Einschnittbereichs wird die Klebstoffmasse zwischen dem schlauchförmigen Element und dem ersten Flächenelement zusammengedrückt und bildet so einen breiteren Streifen an Klebstoffmaterial aus, der für ein dichte Befestigung des schlauchförmigen Elements an dem ersten Flächenelement sorgt.

Weiterhin wird eigenständiger Schutz beansprucht für ein Verfahren zum luftdichten Abdichten einer insbesondere feuchteadaptiven Dampfbremse oder Dampfsperre, die insbesondere zum Einsatz bei der Wärmedämmung von Gebäuden vorgesehen ist, an einem Durchdringungsbereich, an welchem die Dampfbremse oder Dampfsperre von einem Körper durchdrungen ist, wobei das Verfahren folgende Schritte aufweist:
- Anbringen der Dampfbremse oder Dampfsperre an einer hierfür vorgesehen Stelle,
- Ausschneiden der Dampfbremse oder Dampfsperre an Bereichen, die von dem Körper durchdrungen sind, zur Ausbildung des Durchdringungsbereichs,
- Herstellen einer Manschettenvorrichtung mit den Verfahrensschritten wie sie oben beschrieben sind,
- Aufschneiden der Manschettenvorrichtung derart, dass ein durchgängiger Öffnungsbereich vom ersten Flächenelement hin zum schlauchförmigen Element vorgesehen ist, so dass die Manschettenvorrichtung aufklappbar ist,
- Abdecken des Durchdringungsbereichs mit der Manschettenvorrichtung, derart, dass die Manschettenvorrichtung den durchdringenden Körper umschließt,
- Abdichten von einem Übergangsbereich oder von Übergangsbereichen zwischen dem ersten Flächenelement der Manschettenvorrichtung und der Dampfbremse oder Dampfsperre mittels des mindestens einen ersten Befestigungsmittels,
- Abdichten von einem Übergangsbereich oder von Übergangsbereichen zwischen dem schlauchförmigen Element der Manschettenvorrichtung und dem durchdringenden Körper mittels des mindestens einen zweiten Befestigungsmittels,
- Abdichten des Öffnungsbereichs mittels des mindestens einen dritten Befestigungsmittels.

Es ist ersichtlich, dass mit der erfindungsgemäßen Dampfbremse oder auch Dampfsperre auf einfachste Art und Weise ein Abdichtungselement, nämlich eine Manschettenvorrichtung herstellbar ist, die dann - wie soeben beschrieben - auf den Durchdringungsbereich (der Bereich, der von einem Körper, wie z. B. von einem Rohr oder dergleichen Element durchbrochen ist) der bereits verlegten Folie auflegbar ist bzw. an dieser anbringbar ist. Mit den entsprechenden Befestigungsmitteln lassen sich schließlich die Übergangsbereiche (Übergang von verlegter Dampfbremse bzw. ―sperre zum ersten Flächenelement und Übergang vom schlauchförmigen Element zum durchdringenden Körper) einfach und sicher abdichten.

Das Aufschneiden der Manschettenvorrichtung ist erforderlich, um diese über den durchdringenden Körper ziehen zu können. Das heißt, die Manschettenvorrichtung muss vom ersten Flächenelement bis hin zum ersten Ende des schlauchförmigen Elements und bis zu dessen zweitem Ende aufgeschnitten werden (die Manschettenvorrichtung ist somit "aufklappbar"). Dieser durchgängige Schnitt lässt sich mit weiteren Befestigungsmitteln, am besten mit mindestens einem weiteren Klebeband nach dem Aufbringen auf die Dampfbremse und den durchdringenden Körper wieder luftdicht abschließen.

Als Befestigungsmittel sind insbesondere Klebebänder vorgesehen, die (wie oben beschrieben) schon an dem ersten Flächenelement angebracht und mit der bereits verlegten Dampfbremse in Kontakt bringbar sind. Weitere Klebebänder können schließlich um das schlauchförmige Element und den durchdringenden Körper gewickelt werden, so dass alle Durchlässe abgedichtet sind. Auch der Öffnungsbereich ist mit den Klebebändern wieder verschließbar.

Da das zweite Flächenelement zum schlauchförmigen Element gebogen ist, ist am schlauchförmigen Element bereits ein Öffnungsbereich vorgesehen. Dieser ergibt dann mit dem Öffnungsbereich am ersten Flächenelement den durchgehenden Öffnungsbereich. Hierfür müssen die Fixierungs-Klebebänder zum Fixieren am Hilfselement wieder entfernt werden (um den Öffnungsbereich abschließend "richtig", also luftdicht zu verkleben).

Der Öffnungsbereich ist vorzugsweise derart auszubilden, dass er an der "langen" Seite des schlauchförmigen Elements vorgesehen ist. So wird eine Faltenbildung beim Überstreifen auf den durchdringenden Körper vermieden. Weiterhin ist der Öffnungsbereich besser zugänglich ("von vorn") und erlaubt somit eine vereinfachte Anbringung der den Öffnungsbereich verschließenden Klebebänder. Die Verklebung des Öffnungsbereichs ist ohnehin entlang des stumpfen Winkels einfacher als entlang des spitzen Winkels.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- - Fig. 1: eine Ausführungsform einer erfindungsgemäßen Dampfbremsfolie mit entsprechenden Aufdrucken (Ausschnitt);
- - Fig. 2: eine schematische Schnittansicht (Seitenansicht)der erfindungsgemäβen Manschettenvorrichtung;
- - Fig. 3: eine Draufsicht auf die Manschettenvorrichtung gemäß Fig. 2, wobei das schlauchförmige Element nur teilweise dargestellt ist;
- - Fig. 4: eine schematische Schnittansicht (Seitenansicht), die ausschnittsweise das Verkleben der Manschettenvorrichtung mit einer Dampfbremsfolie an einem geneigten Dach darstellt;
- - Fig. 5: eine perspektivische Ansicht der verklebten Manschettenvorrichtung in eingebautem Zustand.

In der nachfolgenden Beschreibung werden für gleiche und gleich wirkende Teile dieselben Bezugsziffern verwendet.

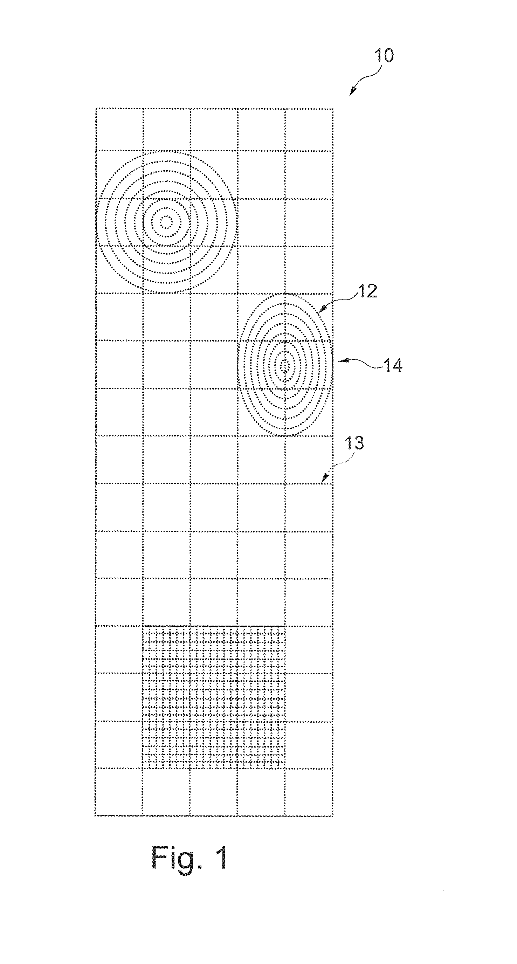

Fig. 1 zeigt eine erfindungsgemäße Dampfbremsfolie 10 mit Aufdruck. Es ist lediglich ein Ausschnitt gezeigt. Dampfbremsfolien dieser Art (oder auch Dampfsperren) werden u. a. für den Einsatz bei der Wärmedämmung von Gebäuden verwendet und zwar maßgeblich in Zusammenhang mit Wärmedämmsystemen.

Hierzu muss die Folie "dicht" sein, d. h., Feuchtigkeit darf beispielsweise nicht unkontrolliert über größere Öffnungen in die Dämm- und Dachkonstruktion eintreten. Die Folie dicht zu halten ist insbesondere dann schwierig, wenn Rohrleitungen, Kamine oder dergleichen Körper durch die Folie geführt werden müssen. Hier die Durchdringungsbereiche, also die Anschlussstellen bzw. Übergangsbereiche zwischen Körper und Folie wieder abzudichten, insbesondere luftdicht, gestaltet sich als äußerst schwierig. Leckagen sind meist nicht vermeidbar, insbesondere ist es problematisch, die Folie über lange Zeit dicht zu halten.

Die erfindungsgemäße Folie ermöglicht nun ein Dichthalten von derartigen Übergangsbereichen, d. h. von Bereichen, die von einem Gegenstand bzw. einem Körper durchdrungen sind.

Wie aus Fig. 1 zu entnehmen ist, weist die Folie 10 Aufdrucke auf. Dies sind rasterartige Markierungen als Schnitthilfslinien 12, 13 zur Bildung eines Schnittmusters, anhand derer mindestens eine Manschettenvorrichtung 20 ausschneidbar ist. Zum einen sind erste Schnitthilfslinien 12 in Form von geometrischen Figuren abgebildet, die hier jeweils in verschiedenen Größen vorgesehen sind. Zur Platzeinsparung sind jeweils gleiche Figuren unterschiedlicher Größe konzentrisch angeordnet (konzentrische Anordnung 14). Gezeigt sind Kreise und Ellipsen, wobei auch Quadrate, Rechtecke oder andere gewünschte Formen aufbringbar sind.

Zum anderen weist die Folie 10 ein Grobraster als zweite Schnitthilfslinien 13 auf, hier z. B. Gitternetzlinien, in welche die ersten Schnitthilfslinien 12 eingebettet sind.

Es kann beispielsweise noch ein Maßstab (hier nicht gezeigt) zur Orientierung aufgezeichnet sein, der in einer Längsrichtung (z. B. in einer Wickelrichtung einer Vorratsrolle) der Folie 10 orientiert ist. Folien dieser Art sind z. B. als Rollen gewickelt und weisen daher eine Längsrichtung und eine Querrichtung auf.

Die Schnitthilfslinien 12, 13 erlauben das Ausschneiden von Manschettenvorrichtungen 20, die zum Abdichten eines Lochs, also einer Durchdringung 11 einer bereits verlegten Folie 10' (wie bereits oben beschrieben, kann eine derartige Folie im Rahmen einer Wärmedämmung verlegt sein), benötigt werden.

Nachfolgend wird erläutert, wie die Manschettenvorrichtung 20 zur luftdichten Abdichtung einer durchlöcherten Folie 10' hergestellt und eingesetzt werden kann. Beispielhaft wird der Einsatz bei der Wärmedämmung eines Gebäudedaches 110 beschrieben.

Wie bereits oben angemerkt werden Dampfbremsen oder auch Dampfsperren 10' z. B. rauminnenseitig auf etwaigem Wärmedämmmaterial aufgebracht. Damit die Dampfbremse oder Dampfsperre ihre gewünschte Wirkung entfalten kann, muss die Folie 10' auch dort luftdicht abgedichtet sein, wo sie von Rohrleitungen, Kaminen, Leitungssträngen 100 etc. durchdrungen ist, die durch die Dampfbremsfolie oder ― sperrfolie 10' hindurchgeführt werden. Hierzu ist die Folie 10' um den Bereich des durchdringenden Körpers 100 auszuschneiden. Die so entstandene Öffnung 11 wird nun mit der Manschettenvorrichtung 20 abgedeckt.

Ein weiteres Stück der Folie (Dampfbremsenelement oder Dampfsperrenelement), das also noch nicht auf dem Dach 110 angebracht ist, wird zurechtgelegt, so dass eine entsprechende Manschettenvorrichtung 20 bzw. entsprechende Flächenelemente 21, 25 ausschneidbar ist bzw. sind.

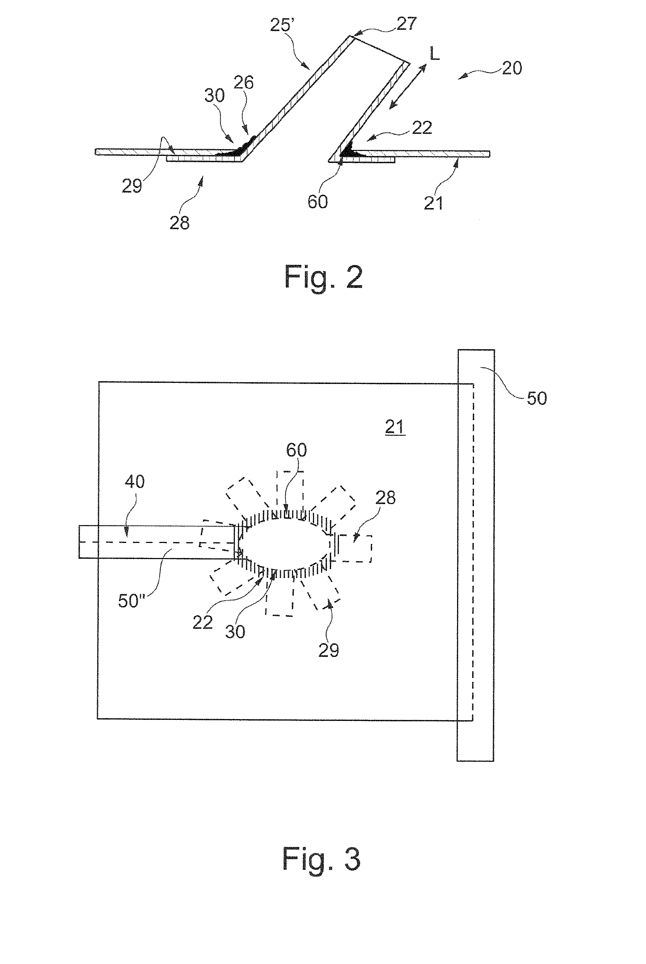

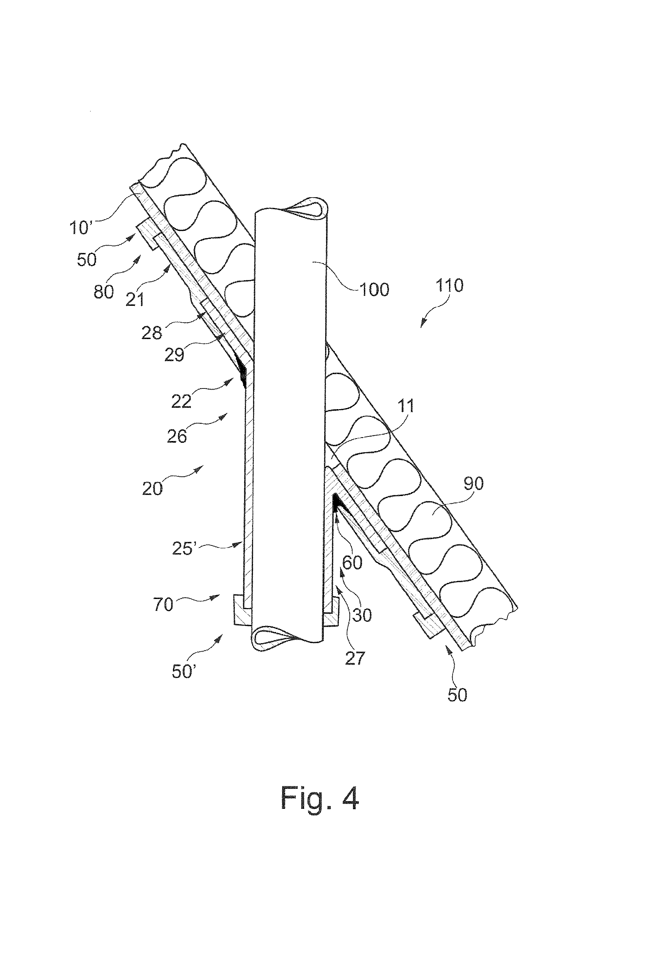

Fig. 2 und 3 zeigen die Manschettenvorrichtung, wie sie für die luftdichte Abdichtung vorgesehen ist. Die Manschette umfasst ein erstes Flächenelement 21 zum insbesondere luftdichten Anordnen, insbesondere Aufsetzen, der Manschettenvorrichtung 20 auf die bereits angebrachte Dampfbremse oder Dampfsperre 10' an dem Durchdringungsbereich 11 (hierzu siehe Fig. 4) und ein zweites Flächenelement 25 zum Ausbilden eines schlauchförmigen Elements 25' zum Umschließen des Körpers 100 und Anordnen an dem ersten Flächenelement 21 derart, dass das schlauchförmige Element 25' mit einem ersten Ende 26 in den Lochbereich 22 des ersten Flächenelements 21 mündet.

Hierfür sind aus einem Stück einer noch nicht verlegten Dampfbrems- oder Dampfsperrfolie das erste Flächenelement 21 und das zweite Flächenelement 25 auszuschneiden. Die Flächenelemente können in einer gewünschten Größe im Wesentlichen entlang der zweiten Schnitthilfslinien 13 herausgetrennt werden. Diese Hilfslinien erleichtern die Bemessung der Flächenelemente. Mit den ersten Schnitthilfslinien 12 kann jeweils ein Lochbereich 22 der Manschettenvorrichtung 20 hergestellt, insbesondere ausgeschnitten werden.

Wie die Fig. 2 und 3 zeigen, ist das schlauchförmige Element 25' derart ausgebildet, dass ein erstes Ende 26 des Elements 25' den Lochbereich 22 des ersten Flächenelements 21 umgibt. In diesem Falle ist der Lochbereich 22 elliptisch ausgebildet und ist so an die Projektion des Querschnitts des durchdringenden Körpers 100 auf die angebrachte Dampfbremse oder Dampfsperre 10' angepasst (aufgrund der Dachschräge durchbricht ein im Querschnitt rundes Rohr das Dach mit einem elliptischen Querschnitt (die Dachebene betrachtet, s. hierzu Fig. 4). Eine entsprechende Ellipse kann nun über die ersten Schnitthilfslinien 12 ausgeschnitten werden.

Die geometrischen Formen oder Figuren sind an übliche Rohrdurchmesser angepasst, d. h. an übliche Nenndurchmesser. Auch sind übliche Dachschrägen bei der Ausgestaltung der ellipsenförmigen Figuren berücksichtigt, z. B. im Bereich von 25° bis 45°.

Um diesen elliptischen Querschnitt am ersten Ende des schlauchförmigen Elements 25' nachzubilden, wird das zweite Flächenelement 25 auf ein Hilfselement aufgezogen, das dem durchdringenden Körper im Durchdringungsbereich nachgebildet ist und insbesondere den Durchdringungsquerschnitt aufweist (z. B. ein Rohrleitungsabschnitt, der ein schräges und damit ellipsenförmiges erstes Ende aufweist). Das erste Ende 26 des schlauchförmigen Elements 25' wird entsprechend der Kontur des ersten Endes des Hilfselements abgeschnitten. Danach wird das erste Ende des schlauchförmigen Elements 25' in einer Längserstreckungsrichtung L des schlauchförmigen Elements 25' insbesondere mehrfach eingeschnitten, je nach Länge des schlauchförmigen Elements z. B. etwa 2 bis 5 cm, so dass sich ein Einschnittbereich 28 ausbildet, der fächerförmig entlang einer Biegekante 30 nach außen aufgebogen werden kann. Dieser Einschnittbereich 28 weist einen Auflagebereich 29 auf, auf den dann das erste Element 21 aufgelegt und mit dem Auflagebereich 29 verklebt werden kann (hierzu wird das erste Flächenelements 21 auf den Auflagebereich 29 des Einschnittbereichs 28 des schlauchförmigen Elements 25' derart aufgelegt, dass das erste Flächenelement 21 mittels des Lochbereichs 22 über das schlauchförmige Element 25', insbesondere mit dem enthaltenen Hilfselement, gestülpt wird). Der Auflagebereich bzw. die Auflagefläche 29 ist also dem schlauchförmigen Element 25' zugewandt und ist in verklebtem Zustand "unter" dem ersten Flächenelement 21 angeordnet (das heißt, das schlauchförmige Element zieht sich mit dem Einschnittbereich durch den Lochbereich 22 hindurch bzw. unter das erste Flächenelement 21 und ist dort an dem Flächenelement befestigt). Sodann lässt sich das Hilfselement aus dem schlauchförmigen Element herausnehmen und die Manschettenvorrichtung 20 ist einsatzbereit.

Dadurch, dass das schlauchförmige Element 25' an dem ersten Ende 26 entsprechend der angepassten Projektion schräg abgelängt und mit im Wesentlichen gleich langen Einschnitten versehen wird, erstreckt sich das schlauchförmige Element 25' in diesem Falle schräg aus dem ersten Flächenelement 21 bis zu einem zweiten Ende 27 des schlauchförmigen Elements 25' heraus und ist so an den durchdringenden Körper angepasst.

Die Fig. 2 und 3 zeigen auch die Verklebung von erstem Flächenelement 21 und schlauchförmigem Element 25' mittels eines Klebstoffs 60. Dieser ist hier an der Biegekante 30 zwischen Auflagebereich 29 und erstem Flächenelement 21 aufgetragen und bildet bei Zusammenfügen der beiden Teile einen Klebebereich aus, der eine luftdichte Abdichtung gewährleistet.

Besonders geeignet für die Verklebung sind Dampfbremsen-Dicht- und -Klebstoffe, wie sie in der Praxis bekannt sind und zum Anschließen von Dampfbremsfolien und zum Abdichten an Mauerwerk oder anderen Konstruktionselementen verwendet werden. Bevorzugt liegen diese Stoffe in Kartuschen mit handelsüblicher Pistolenform vor und kommen als raupenförmiger Klebemassenauftrag zum Einsatz. Bevorzugt sind inzwischen Dampfbremsen-Dicht- und -Klebstoffe, welche im Wesentlichen frei von flüchtigen organischen Verbindungen (VOC) sind. Derartige einkomponentige Dichtmassen auf Basis einer wässrigen Dispersion von Polyacrylaten sind beispielsweise in der DE 100 00 940 B4 beschrieben. Eine weitere einkomponentige Dichtmasse auf Basis einer wässrigen Dispersion aus Vinylpolymeren ist beispielsweise in der DE 201 22 638 U1 und der DE 200 23 180 U1 beschrieben. Darüber hinaus ist aus der EP 1 724 321 A1 ein VOC-freies und im Wesentlichen wasserfreies Kleb- und Dichtstoffsystem für Dampfbremsfolien beschrieben, welches durch Umgebungsfeuchtigkeit ausgehend von Prepolymeren zu stärker polymerisierten Produkten seine Dichtfähigkeit entfaltet.

Fig. 3 zeigt die Manschettenvorrichtung gemäß Fig. 2 in einer Draufsicht, wobei (zur besseren Übersicht) nur der Einschnittbereich des schlauchförmigen Elements 25' gezeigt ist, nicht jedoch der Fortsatz in Längserstreckungsrichtung L (s. Pfeil in Fig. 2).

Zum Anbringen der Manschettenvorrichtung 20 auf der bereits verlegten Folie 10' muss diese nun wieder aufgeschnitten und ein Öffnungsbereich 40 vorgesehen werden, damit die Manschettenvorrichtung 20 über den durchdringenden Körper 100 gezogen bzw. an diesen angelegt werden kann. Das heißt, die Manschettenvorrichtung wird am ersten Flächenelement 21 hin zum ersten Ende 26 des schlauchförmigen Elements 25' bis zu dessen zweiten Ende 27 geöffnet. Da das zweite Flächenelement 25 zum schlauchförmigen Element 25' gebogen ist, ist am schlauchförmigen Element 25' bereits ein Öffnungsbereich (nicht gezeigt) vorgesehen. Dieser ergibt dann mit dem Öffnungsbereich am ersten Flächenelement den durchgehenden Öffnungsbereich 40.

Der Öffnungsbereich 40 ist vorzugsweise derart auszubilden, dass er an der "langen" Seite des schlauchförmigen Elements 25' vorgesehen ist. So wird eine Faltenbildung beim Überstreifen auf den durchdringenden Körper 100 vermieden. Weiterhin ist der Öffnungsbereich 40 besser zugänglich ("von vorn") und erlaubt somit eine vereinfachte Anbringung der den Öffnungsbereich 40 verschließenden Klebebänder 50".

Fig. 4 zeigt eine schematische Schnittansicht (Seitenansicht), die ausschnittsweise das Verkleben der Manschettenvorrichtung 20 mit einer Dampfbremsfolie 10' an einem geneigten Dach darstellt. Die Manschettenvorrichtung 20 ist auf den durchdringenden Körper 100 aufgezogen und über den Durchdringungsbereich 11 auf die bereits angebrachte Dampfbremse 10'aufgelegt. Mit vorzugsweise bereits vor dem Auflegen der Manschettenvorrichtung 20 auf die Bremse 10' angebrachten ersten Befestigungsmitteln, hier Klebebändern 50, wird die Manschettenvorrichtung 20 an einem Übergangsbereich 80 zwischen Flächenelement 21 und Folie 10' auf der Folie 10' befestigt und zwar so, dass keine Öffnungen verbleiben.

Mittels zweiter Befestigungsmittel 50' wird ein Übergangsbereich 70 zwischen schlauchförmigem Element 25' und Körper 100 abgedichtet, ebenfalls so, dass keine Öffnungen verbleiben. Hier wird z. B. das schlauchförmige Element 25' mittels Klebebändern an dem Rohr 100 befestigt.

Schließlich ist auch der Öffnungsbereich 40 mit dritten Befestigungsmitteln 50", z. B. weiteren Klebebändern, abzudichten. In Fig. 3 ist nur der Teil des mit einem Klebeband abgedichteten Öffnungsbereichs an dem ersten Flächenelement 21 sichtbar.

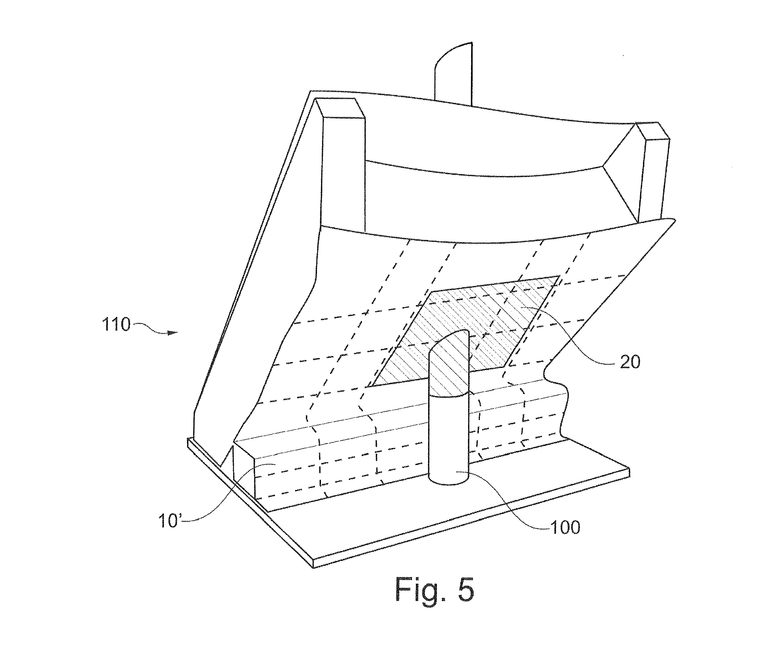

Fig. 5 zeigt nochmals die erfindungsgemäße Manschettenvorrichtung in verklebtem Zustand. Gezeigt ist ein Ausschnitt aus einer Dachkonstruktion.

Mit der erfindungsgemäßen Dampfbremse bzw. Dampfsperre, die meist als Folien ausgebildet sind, lassen sich Öffnungen, bedingt durch Körper, die sich durch die Folie erstrecken, also durch sie hindurch verlaufen, auf einfache Art und Weise mit einem hohen Maß an Dichtigkeit verschließen. Aus der Folie selbst werden Manschettenelemente hergestellt, die sich vor Ort an die entsprechenden Öffnungen anpassen lassen, so dass individuelle Lösungen bei der Nutzung von Dampfbremsen oder Dampfsperren geschaffen werden können.

### Bezugszeichenliste

- 10: Dampfbremse oder Dampfsperre, Folie
- 10': Bereits angebrachte Dampfbremse oder Dampfsperre, Folie
- 11: Öffnung, Durchdringung, Durchdringungsbereich
- 12: Erste Schnitthilfslinien, geometrische Figuren
- 13: Zweite Schnitthilfslinien, Grobraster
- 14: Konzentrische Anordnung geometrischer Figuren
- 20: Manschettenvorrichtung
- 21: Erstes Flächenelement
- 22: Lochbereich
- 25: Zweites Flächenelement
- 25': Schlauchförmiges Element
- 26: Erstes Ende
- 27: Zweites Ende
- 28: Einschnittbereich
- 29: Auflagebereich, Auflagefläche
- 30: Biegekante
- 40: Öffnungsbereich
- 50: Erste Befestigungsmittel, Klebeelement, Klebeband
- 50': Zweite Befestigungsmittel, Klebeelement, Klebeband
- 50": Dritte Befestigungsmittel, Klebeelement, Klebeband
- 60: Klebstoff
- 70: Übergangs-, Überlappungsbereich(e) Manschettenelement (schlauchförmiges Element) ―Körper
- 80: Übergangs-, Überlappungsbereich(e) Manschettenelement (erstes Flächenelement) ―Dampfbremse oder Dampfsperre
- 90: Dämmmaterial
- 100: Durchdringender Körper, Rohrleitung
- 110: Dach
- L: Längserstreckungsrichtung des schlauchförmigen Elements

## Patentansprüche

1. Dampfbremse, insbesondere feuchteadaptive Dampfbremse oder Dampfsperre (10), die insbesondere als Folienelement und insbesondere zum Einsatz bei der Wärmedämmung von Gebäuden vorgesehen ist,
wobei die Dampfbremse oder Dampfsperre (10) rasterartige Markierungen als Schnitthilfslinien zur Bildung eines Schnittmusters aufweist, so dass mindestens eine Manschettenvorrichtung (20) ausschneidbar ist, die an einer bereits angebrachte Dampfbremse oder Dampfsperre (10') an einer hierfür vorgesehenen Stelle zum luftdichten Abdichten der bereits angebrachten Dampfbremse oder Dampfsperre (10') anbringbar oder anordenbar ist, an einem Durchdringungsbereich (11), an welchem die Dampfbremse oder Dampfsperre (10') von einem Körper (100) durchdrungen ist,
derart, dass mindestens ein Teil der Manschettenvorrichtung (20) den durchdringenden Körper (100) umschließt,
wobei die Schnitthilfslinien mindestens eine erste Schnitthilfslinie (12) aufweisen, die als mindestens eine geometrische Figur zur Ausbildung, insbesondere zum Ausschneiden, eines Lochbereichs (22) der Manschettenvorrichtung (20) zur Aufnahme des Körpers (100) vorgesehen ist,
wobei der Lochbereich (22) im Wesentlichen der Projektion des Querschnitts des durchdringenden Körpers (100) auf die angebrachte Dampfbremse oder Dampfsperre (10') angepasst ist.

2. Dampfbremse oder Dampfsperre nach Anspruch 1,
**dadurch gekennzeichnet, dass**
diese derart ausgebildet ist, dass
- ein erstes Flächenelement (21) der Manschettenvorrichtung (20) zum insbesondere luftdichten Anordnen, insbesondere Aufsetzen, der Manschettenvorrichtung (20) auf die bereits angebrachte Dampfbremse oder Dampfsperre (10') an dem Durchdringungsbereich (11) und
- ein zweites Flächenelement (25) der Manschettenvorrichtung (20) zum Ausbilden eines schlauchförmigen Elements (25') zum Umschließen des Körpers (100) und Anordnen an dem ersten Flächenelement (21) derart, dass das schlauchförmige Element (25') mit einem ersten Ende (26) in den Lochbereich (22) des ersten Flächenelements (21) mündet, ausschneidbar sind.

3. Dampfbremse oder Dampfsperre nach Anspruch 1 oder 2,
**dadurch gekennzeichnet, dass**
diese aus demselben Material ausgebildet ist, wie die bereits angebrachte Dampfbremse oder Dampfsperre (10').

4. Dampfbremse oder Dampfsperre nach einem der vorhergehenden Ansprüche, **dadurch gekennzeichnet, dass**
diese als Polyamid-Folie ausgebildet ist.

5. Dampfbremse oder Dampfsperre nach einem der vorhergehenden Ansprüche, **dadurch gekennzeichnet, dass**
die geometrische Figur vorzugsweise als ein Kreis, eine Ellipse, ein Quadrat, ein Rechteck und/oder dergleichen Figuren vorgesehen, insbesondere aufgedruckt ist.

6. Dampfbremse oder Dampfsperre nach einem der vorhergehenden Ansprüche, **dadurch gekennzeichnet, dass**
zwei unterschiedliche geometrische Figuren vorgesehen sind.

7. Dampfbremse oder Dampfsperre nach einem der vorhergehenden Ansprüche, **dadurch gekennzeichnet, dass**
je geometrischer Figur mindestens zwei formgleiche Figuren unterschiedlicher Größe vorgesehen sind,
die vorzugsweise in einer konzentrischen Anordnung (14) zueinander angeordnet sind.

8. Dampfbremse oder Dampfsperre nach einem der vorhergehenden Ansprüche, **dadurch gekennzeichnet, dass**
die Schnitthilfslinien mindestens zweite Schnitthilfslinien (13) aufweisen, die als ein Grobraster ausgebildet sind und die sich vorzugsweise über die gesamte Dampfbremse oder Dampfsperre (10) erstrecken,
wobei das Grobraster (13) von den geometrischen Figuren überlagert ist.

9. Dampfbremse oder Dampfsperre nach einem der vorhergehenden Ansprüche, insbesondere nach Anspruch 8,
**dadurch gekennzeichnet, dass**
das erste Flächenelement (21) und das zweite Flächenelement (25) entlang des Grobrasters (23) ausschneidbar sind.

10. Dampfbremse oder Dampfsperre nach einem der vorhergehenden Ansprüche, insbesondere nach Anspruch 8 oder 9,
**dadurch gekennzeichnet, dass**
das Grobraster (13) als ein Gittermuster vorgesehen ist,
dessen einzelne Elemente vorzugsweise als Quadrate, insbesondere als Quadrate mit einer Seitenlänge von jeweils 10 cm vorgesehen sind.

11. Dampfbremse oder Dampfsperre nach einem der vorhergehenden Ansprüche, **dadurch gekennzeichnet, dass**
sich die geometrische Figur oder die geometrischen Figuren in insbesondere regelmäßigen Abständen auf der Bremse oder Sperre (10) wiederholt bzw. wiederholen.

12. Dampfbremse oder Dampfsperre nach einem der vorhergehenden Ansprüche, insbesondere nach einem der Ansprüche 8 bis 11,
**dadurch gekennzeichnet, dass**
die erste(n) Schnitthilfslinie(n) (12) und die zweite(n) Schnitthilfslinie(n) (13) als gestrichelte, punktierte und/oder durchgezogene Linien vorgesehen ist bzw. sind.

13. Dampfbremse oder Dampfsperre nach einem der vorhergehenden Ansprüche, **dadurch gekennzeichnet, dass**
dieses mindestens entlang einer vorgegebenen Richtung einen abgebildeten, insbesondere aufgedruckten Maßstab (15) aufweist.

14. Manschettenvorrichtung für eine luftdichte Abdichtung einer insbesondere feuchteadaptiven Dampfbremse oder Dampfsperre (10'), die insbesondere zum Einsatz bei der Wärmedämmung von Gebäuden vorgesehen ist, an einem Durchdringungsbereich (11), an welchen die Dampfbremse oder Dampfsperre (10') von einem Körper (100) durchdrungen ist, umfassend
- ein erstes Flächenelement (21) zum insbesondere luftdichten Anordnen, insbesondere Aufsetzen, der Manschettenvorrichtung (20) auf die Dampfbremse oder Dampfsperre (10') an dem Durchdringungsbereich (11), mit einem insbesondere mittig angeordneten Lochbereich (32) zur Aufnahme des Körpers (100),
wobei der Lochbereich (22) im Wesentlichen der Projektion des Querschnitts des durchdringenden Körpers (100) auf die Dampfbremse oder Dampfsperre (10') angepasst ist,
- ein an dem ersten Flächenelement (21) angeordnetes, insbesondere aufgesetztes schlauchförmiges Element (25') zum Umschließen des Körpers (100),
wobei das schlauchförmige Element (25') an den Enden zur Durchführung des Körpers (100) offen ist und mit einem ersten Ende (26) in den Lochbereich (22) des ersten Flächenelements (21) mündet, derart, dass das erste Flächenelement (21) mindestens teilweise auf einem Auflagebereich (29) des schlauchförmigen Elements (25') aufliegt, wobei das schlauchförmige Element (25') mit dem ersten Flächenelement (21) einstückig, insbesondere luftdicht, verbunden ist.

15. Manschettenvorrichtung nach Anspruch 14,
**dadurch gekennzeichnet, dass**
diese derart ausgebildet ist, dass sie mittels Befestigungsmittel (50, 50', 50"), insbesondere Klebeelementen, auf den Durchdringungsbereich (11) aufbringbar ist, derart, dass Übergangsbereiche (70, 80) zwischen durchdringendem Körper (100), Manschettenvorrichtung (20) und der Dampfbremse oder Dampfsperre (10') insbesondere luftdicht abdichtbar oder abgedichtet sind.

16. Verfahren zum Herstellen einer Manschettenvorrichtung mittels einer insbesondere feuchteadaptiven Dampfbremse oder Dampfsperre (10) nach einem der Ansprüche 1 bis 13,
mit einem Hilfselement, das im Wesentlichen dem Körper (100) mindestens an dem Durchdringungsbereich (11) nachgebildet ist,
und ein erstes Ende und ein zweites Ende aufweist, wobei das erste Ende der Projektion des Querschnitts des durchdringenden Körpers (100) auf die angebrachte Dampfbremse oder Dampfsperre (10') angepasst ist,
wobei das Verfahren folgende Schritte aufweist:
- Ausschneiden des ersten Flächenelements (21') aus der Dampfbremse oder Dampfsperre (10), insbesondere entlang einer der zweiten Schnitthilfslinien (13),
- Ausschneiden des zweiten Flächenelements aus der Dampfbremse oder Dampfsperre (10), insbesondere entlang einer der zweiten Schnitthilfslinien (13),
- Ausschneiden eines Lochbereichs (22) aus dem ersten Flächenelement (21) entlang der mindestens einen Schnitthilfslinie (12), derart, dass der Lochbereich (22) im Wesentlichen der Projektion des Querschnitts des durchdringenden Körpers (100) auf die angebrachte Dampfbremse oder Dampfsperre (10') angepasst ist,
- Umhüllen des Hilfselements mit dem zweiten Flächenelement (25), insbesondere mit Überlappungsbereichen an dem zweiten Flächenelement (25), derart, dass das schlauchförmige Element (25') ausgebildet wird,
- Ablängen des schlauchförmigen Elements (25') an dem ersten Ende des Hilfselements entlang dessen Kontur, derart, dass ein erstes Ende (26) des schlauchförmigen Elements (25') im Wesentlichen der Projektion des Querschnitts des durchdringenden Körpers (100) auf die angebrachte Dampfbremse oder Dampfsperre (10') angepasst ist,
- Einschneiden, insbesondere mehrfaches Einschneiden des schlauchförmigen Elements (25') an dessen erstem Ende (26), in einer Längserstreckungsrichtung (L) des schlauchförmigen Elements (25') derart, dass sich die so entstehenden Einschnitte vom ersten Ende (26) in das schlauchförmige Element (25') erstrecken und so ein Einschnittbereich (28) ausgebildet wird,
- Auffächern des Einschnittbereichs (28) durch Umbiegen dieses Bereichs entlang einer Biegekante (30) derart, dass der Einschnittbereich (28) einen Auflagebereich (29) bildet, der dem schlauchförmigen Element (25') zugewandt ist, zum Anlegen bzw. Anordnen des ersten Flächenelements (21),
- Verkleben des Einschnittbereichs (28) des schlauchförmigen Elements (25') mit dem ersten Flächenelement (21) derart, dass das erste Ende (26) des schlauchförmigen Elements (25') in den Lochbereich (22) des ersten Flächenelements (21) mündet,
- Entfernen des Hilfselements aus der Manschettenvorrichtung (20).

17. Verfahren nach Anspruch 16,
**gekennzeichnet durch** den weiteren Schritt:
- Anbringen von mindestens einem ersten Befestigungsmittel (50), insbesondere von Klebebändern, an dem ersten Flächenelement (21) derart, dass die Manschettenvorrichtung (20) auf der bereits angebrachten Dampfbremse oder Dampfsperre (10') anbringbar ist.

18. Verfahren nach Anspruch 16 oder 17,
**gekennzeichnet durch** den weiteren Schritt:
- Fixieren des zweiten Flächenelements (25) auf dem Hilfselement zur Ausbildung des schlauchförmigen Elements (25') mittels mindestens eines weiteren Befestigungsmittels, insbesondere mittels mindestens eines Klebebands.

19. Verfahren nach einem der Ansprüche 16 bis 18,
**gekennzeichnet durch** die weiteren Schritte:
- Anbringen eines Klebstoffes (60) auf dem dem schlauchförmigen Element (25') zugewandten Auflagebereich (29) des Einschnittbereichs (28), insbesondere entlang der Biegekante (30),
- Auflegen des ersten Flächenelements (21) auf den Auflagebereich (29) des Einschnittbereichs (28) des schlauchförmigen Elements (25') derart, dass das erste Flächenelement (21) mittels des Lochbereichs (22) über das schlauchförmige Element (25'), insbesondere mit dem enthaltenen Hilfselement, gestülpt wird,
- Verkleben des ersten Flächenelements (21) mit dem schlauchförmigen Element (25'), insbesondere **durch** Andrücken des ersten Flächenelements (21).

20. Verfahren zum luftdichten Abdichten einer insbesondere feuchteadaptiven Dampfbremse oder Dampfsperre (10'), die insbesondere zum Einsatz bei der Wärmedämmung von Gebäuden vorgesehen ist, an einem Durchdringungsbereich (11), an welchem die Dampfbremse oder Dampfsperre (10') von einem Körper (100) durchdrungen ist,
wobei das Verfahren folgende Schritte aufweist:
- Anbringen der Dampfbremse oder Dampfsperre (10') an einer hierfür vorgesehen Stelle,
- Ausschneiden der Dampfbremse oder Dampfsperre (10') an Bereichen, die von dem Körper (100) durchdrungen sind, zur Ausbildung des Durchdringungsbereichs (11),
- Herstellen einer Manschettenvorrichtung (20) mit den Verfahrensschritten nach einem der Ansprüche 16 bis 19,
- Aufschneiden der Manschettenvorrichtung (20) derart, dass ein durchgängiger Öffnungsbereich (40) vom ersten Flächenelement (21) hin zum schlauchförmigen Element (25') vorgesehen ist, so dass die Manschettenvorrichtung aufklappbar ist,
- Abdecken des Durchdringungsbereichs (11) mit der Manschettenvorrichtung (20), derart, dass die Manschettenvorrichtung (20) den durchdringenden Körper (100) umschließt,
- Abdichten von einem Übergangsbereich oder von Übergangsbereichen (80) zwischen dem ersten Flächenelement (21) der Manschettenvorrichtung (20) und der Dampfbremse oder Dampfsperre (10') mittels des mindestens einen ersten Befestigungsmittels (50),
- Abdichten von einem Übergangsbereich oder von Übergangsbereichen (70) zwischen dem schlauchförmigen Element (25') der Manschettenvorrichtung (20) und dem durchdringenden Körper (100) mittels des mindestens einen zweiten Befestigungsmittels (50'),
- Abdichten des Öffnungsbereichs (40) mittels des mindestens einen dritten Befestigungsmittels (50").
